# FASCICULE DE BREVET EUROPEEN

(11) **EP 1 399 338 B1**
(45) Date de publication et mention de la délivrance du brevet: **11.01.2006**
(21) Numéro de dépôt: 02743048.7
(22) Date de dépôt: 17.05.2002
(51) Int. Cl.: B60R 25/00

(54) **PROCEDE DE LOCALISATION D'UN BADGE POUR UN SYSTEME MAIN LIBRE D'UN VEHICULE AUTOMOBILE**
TRANSPONDER-ORTUNGSVERFAHREN FÜR EIN FREIHAND-ZUGANGSSYSTEM EINES KRAFTFAHRZEUGS
METHOD FOR LOCATING A BADGE FOR A MOTOR VEHICLE HANDS-FREE ENTRY SYSTEM

(30) Priorité: 27.06.2001 FR 0108470
(43) Date de publication de la demande: 24.03.2004
(73) Titulaire: Siemens VDO Automotive S.A.S., 31036 Toulouse Cédex 01 (FR)
(72) Inventeur: BRILLON, Alain, F-31270 Villeneuve Tolosane (FR)
(86) Numéro de dépôt international: PCT/EP2002/005466
(87) Numéro de publication internationale: WO 2003/002384

(56) Documents cités:
- EP-A- 0 523 602
- DE-A- 19 835 155
- US-A- 4 873 530
- US-A1- 2001 003 405

## Description

La présente invention concerne un procédé de localisation d'un badge utilisé notamment pour un système main libre d'un véhicule automobile.

Un tel procédé est connu par EP 0 523 602 A1.

Un système main libre permet d'accéder à son véhicule et de démarrer celui-ci sans avoir à utiliser de clef mécanique. L'utilisateur du véhicule est alors simplement muni d'une carte électronique (appelée aussi par la suite badge) qui est détectée et reconnue par un dispositif de commande et de gestion associé à des antennes disposées à bord du véhicule. Si la carte est identifiée par le dispositif de commande et de gestion comme étant une carte autorisée pour le véhicule, le porteur de cette carte peut pénétrer à l'intérieur du véhicule en saisissant simplement une poignée de portière et démarrer le moteur du véhicule par simple action sur un bouton.

On notera que le terme "bagde" recouvre en fait tout système de clef qu'elle comporte ou non une carte électronique rigide (exemple: composants électronique placés sur un circuit flexible, ou sur un circuit hybride ...).

Généralement, pour un tel système main libre, un groupe d'antennes est destiné à détecter la présence du badge à l'extérieur du véhicule et un autre à l'intérieur de celui-ci. Si un badge autorisé est détecté à l'extérieur du véhicule, le système de commande et de gestion permettra l'accès à bord du véhicule sans toutefois permettre un démarrage tandis que si ce badge est à l'intérieur du véhicule, un démarrage du moteur pourra avoir lieu.

Pour réaliser la localisation du badge, un signal est envoyé à un groupe d'antennes qui réalisent alors une émission correspondante tandis qu'aucun signal n'est envoyé aux autres antennes de telle sorte qu'elles restent muettes. Les antennes utilisées sont des antennes LF (Low Frequency ou basse fréquence) émettant un champ magnétique d'une fréquence habituellement située autour de 125 kHz avec une portée restreinte permettant ainsi de réaliser une bonne localisation du badge correspondant Les dialogues entre les antennes intérieures et le badge sont de nature différente des dialogues entre les antennes extérieures et le badge. Ceci permet au badge de connaître par avance la réponse attendue par le véhicule. Cette réponse est généralement réalisée par émission d'un signal RF (Radio Fréquence) d'une fréquence généralement située aux environs de 433 MHz.

Les antennes intérieures sont généralement considérées comme fiables. Le champ émis par celles-ci ne déborde généralement pas hors de l'habitacle du véhicule. Au contraire, les antennes extérieures émettent généralement un signal aussi à l'intérieur de l'habitacle du véhicule, généralement limité à proximité des portières de celui-ci. Un badge est alors considéré à l'extérieur du véhicule s'il répond aux antennes extérieures sans toutefois répondre aux antennes intérieures.

La localisation d'un badge à l'extérieur du véhicule se base donc sur une non réponse du badge à une sollicitation par les antennes intérieures. Il se peut toutefois que le badge réponde à une sollicitation par les antennes intérieures mais que cette réponse ne soit pas reçue par le dispositif de gestion des antennes. Plusieurs causes peuvent être à l'origine de ce problème, telles par exemple la présence de parasites ou l'envoi d'une trame RF d'un autre système utilisant la même bande de fréquence. Cette non réception de la réponse par le système de gestion des antennes du véhicule sera interprétée comme une non réponse à la sollicitation des antennes intérieures et le badge sera alors considéré comme étant à l'extérieur du véhicule bien que se trouvant en fait à l'intérieur de celui-ci. Le dispositif de gestion donnera donc son accord pour exécuter un ordre de verrouillage du véhicule bien que l'utilisateur n'ait pas son badge sur lui. De plus, toute personne pourra déverrouiller le véhicule avec le badge resté dans le véhicule.

La présente invention a alors pour but de fournir un procédé de localisation d'un badge destiné à un système main libre de véhicule automobile permettant de détecter de manière fiable la présence d'un badge à l'extérieur du véhicule.

A cet effet, le procédé qu'elle propose est un procédé de localisation d'un badge pour un système main libre d'un véhicule automobile selon les caractéristiques de la revendication 1; ce procédé comporte les étapes suivantes :
- émission sous forme d'interrogation d'un signal par un premier groupe d'antennes du véhicule vers le badge,
- réponse éventuelle du badge à cette première interrogation,
- émission sous forme d'interrogation d'un signal par un second groupe d'antennes du véhicule vers le badge,
- réponse éventuelle du badge à cette seconde interrogation.

Selon l'invention, en cas de réponse du badge à la première interrogation, le badge mémorise durant un laps de temps prédéterminé le fait qu'il a répondu à un signal émis par une antenne du premier groupe d'antennes et la réponse éventuelle faite à la seconde interrogation inclut le cas échéant une information indiquant qu'une réponse a déjà été émise suite à une interrogation provenant du premier groupe d'antennes, le badge étant alors localisé dans la zone couverte par le premier groupe d'antennes si une réponse est obtenue suite à la première interrogation, dans la zone couverte par le second groupe d'antennes si une réponse est obtenue suite à la seconde interrogation et dans la zone de recouvrement couverte par les deux groupes d'antennes si la réponse à la seconde information contient en outre une indication complémentaire indiquant que le badge a déjà répondu antérieurement.

Dans une forme de mise en oeuvre de ce procédé, le premier groupe d'antennes comporte par exemple des antennes émettant un signal électromagnétique avec une portée limitée sensiblement à l'intérieur du véhicule. Le second groupe d'antennes comporte quant à lui par exemple des antennes émettant un signal électromagnétique avec une portée limitée essentiellement à l'extérieur du véhicule.

La présente invention propose aussi un procédé de localisation, pour un système main libre d'un véhicule automobile, d'un badge se trouvant à l'extérieur du véhicule, le véhicule étant équipé d'antennes intérieures émettant un signal électromagnétique à l'intérieur de l'habitacle du véhicule et d'antennes extérieures émettant un signal électromagnétique essentiellement à l'extérieur de l'habitacle avec un possible débordement à l'intérieur de l'habitacle selon les caractéristiques de la revendication 4; ce procédé comporte les étapes suivantes :
- émission sous forme d'interrogation d'un signal par les antennes intérieures du véhicule vers le badge,
- réponse éventuelle du badge à cette première interrogation,
- émission sous forme d'interrogation d'un signal par les antennes extérieures du véhicule vers le badge,
- réponse du badge à cette seconde interrogation.

Dans ce procédé, selon l'invention, en cas de réponse du badge à la première interrogation, le badge mémorise durant un laps de temps prédéterminé le fait qu'il a répondu à un signal émis par une antenne intérieure, et en ce que la réponse faite à la seconde interrogation inclut le cas échéant une information indiquant qu'une réponse a déjà été émise suite à une interrogation provenant des antennes intérieures, le badge étant alors localisé à l'extérieur du véhicule lorsqu'une réponse est reçue suite à la seconde interrogation et que cette réponse ne comporte pas d'indication particulière.

On retrouve ici deux groupes d'antennes, les antennes intérieures correspondant au premier groupe d'antennes et les antennes extérieures au second groupe d'antennes.

Les signaux émis par les deux groupes d'antennes sont de préférence des signaux basse fréquence de l'ordre de 125 kHz. Ce type de signaux est déjà classiquement utilisé car il permet notamment de mieux contrôler la zone de couverture des antennes. La réponse du badge est quant à elle de préférence effectuée en radio fréquence de l'ordre de 433 MHz.

Pour bien séquencer les différentes étapes du procédé, il est préférable que l'interrogation effectuée par le second groupe d'antennes soit réalisée suffisamment longtemps après l'interrogation effectuée par le premier groupe d'antennes pour laisser le temps au badge de répondre à une interrogation avant qu'il n'en reçoive une autre.

Toutes les antennes d'un même groupe d'antennes peuvent émettre simultanément leur signal d'interrogation pour la localisation du badge mais pour limiter la puissance du signal émis, les antennes d'un même groupe d'antennes peuvent aussi émettre les unes après les autres une interrogation vers le badge.

Les détails et avantages de la présente invention ressortiront mieux de la description qui suit, faite en référence au dessin schématique annexé, sur lequel :
Figure 1 est une vue très schématique d'un véhicule en vue de dessus, et
Figure 2 montre des diagrammes illustrant des émissions de signaux LF et RF.

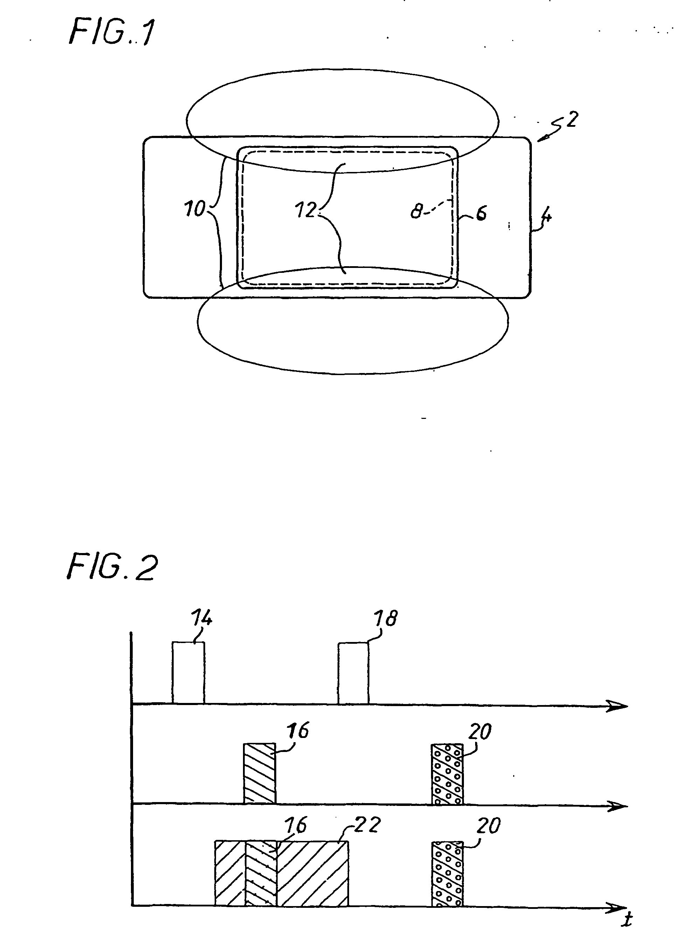

Sur la figure 1, un véhicule 2 est symbolisé schématiquement en vue de dessus. Un premier rectangle 4 symbolise le contour extérieur du véhicule tandis qu'un second rectangle 6 symbolise quant à lui l'habitacle de ce véhicule 2.

Le véhicule 2 représenté est équipé d'un système d'accès main libre. Ce système permet à un utilisateur pour l'accès au véhicule 2 de verrouiller et déverrouiller les portières sans avoir à utiliser une clef mécanique classique. L'utilisateur porte simplement un badge (non représenté) qui se présente par exemple sous la forme d'une carte électronique. La détection de ce badge et son identification autorisent le verrouillage et le déverrouillage lorsque l'utilisateur les sollicite et qu'il porte le badge sur lui. Un tel système est déjà connu de l'homme du métier.

De manière connue, le véhicule 2 est équipé d'un premier groupe d'antennes, appelées par la suite antennes intérieures, capable d'émettre un signal électromagnétique à l'intérieur de l'habitacle 6. Un second groupe d'antennes, appelées par la suite antennes extérieures, émet quant à lui un signal électromagnétique du même type que celui émis par les antennes intérieures mais à l'extérieur du véhicule 2. Le signal électromagnétique émis par ces antennes est un signal de type LF (Low Frequency ou basse fréquence) qui, dans le mode de réalisation décrit, présente une fréquence de 125 kHz. Sur la figure 1, la courbe sensiblement rectangulaire en trait pointillé portant la référence 8 symbolise la portée des antennes intérieures, c'est-à-dire la zone dans laquelle le signal émis par les antennes intérieures peut être capté par un badge du système main libre. De même, deux courbes de forme sensiblement elliptique portant la référence 10 symbolisent la portée des antennes extérieures.

Comme c'est généralement le cas dans les véhicules équipés d'un système main libre, une zone de recouvrement 12 existe. Si un badge se trouve dans cette zone de recouvrement 12, il peut à la fois capter un signal émis par une antenne extérieure et un signal émis par une antenne intérieure. Des problèmes se posent alors lorsqu'il convient de localiser un badge et que celui-ci se trouve dans une zone de recouvrement 12. Dans des solutions de l'art antérieur, on considère que la portée des antennes intérieures ne déborde pas hors de l'habitacle 6 du véhicule. Ainsi donc, si un badge est détecté suite à l'émission d'une interrogation de localisation par une antenne intérieure, ce badge sera considéré comme étant à l'intérieur du véhicule, même s'il répond également à une sollicitation d'une antenne extérieure.

Le problème qui se pose alors est lorsque la réponse émise par le badge suite à une sollicitation des antennes intérieures ne parvient pas au dispositif de gestion du système main libre du véhicule. Ceci peut arriver pour une raison quelconque, telle par exemple une émission voisine parasite. Si alors la réponse suite à la sollicitation des antennes extérieures parvient au dispositif de gestion du système main libre du véhicule, le badge est identifié comme étant à l'extérieur du véhicule bien que se trouvant en fait à l'intérieur de celui-ci.

La solution proposée par l'invention est illustrée en référence à la figure 2. Sur cette figure, trois diagrammes symbolisent des signaux émis. Sur le premier diagramme, en haut, on a représenté schématiquement des signaux LF émis par les antennes extérieures et les antennes intérieures. Sur le second diagramme, au milieu, sont représentées schématiquement les réponses émises par le badge suite à la sollicitation des antennes extérieures et intérieures. Enfin, le troisième diagramme, en bas, correspond au second diagramme avec en plus un signal parasite. Pour tous ces diagrammes, on a en abscisses un axe des temps commun.

Sur le premier diagramme, un premier créneau 14 symbolise l'émission d'un signal LF par les antennes intérieures. On suppose ici qu'un badge du système main libre se trouve à l'intérieur d'une zone de recouvrement 12. Ce badge capte alors le signal LF émis par une antenne intérieure et correspondant au créneau 14. Il émet alors en réponse un signal RF (Radio Fréquence) d'une fréquence de 433 MHz (une autre fréquence du même type peut être adoptée). Cette réponse est faite immédiatement après réception du signal LF émis par les antennes intérieures. Elle est schématisée au dessin par un créneau 16 hachuré. Le délai entre l'émission du signal LF par les antennes intérieures et la réponse faite par le badge est de l'ordre de la milliseconde (1 ms).

Après écoulement d'un laps de temps suffisant pour permettre au badge de répondre à la sollicitation des antennes intérieures, soit par exemple après environ 5 ms, les antennes extérieures émettent à leur tour un signal LF schématisé sur le premier diagramme par un second créneau 18. Bien que représentés de façon similaire sur le premier diagramme de la figure 2, les signaux LF émis par les antennes intérieures et les antennes extérieures peuvent être de natures différentes, ce qui permet alors au badge de connaître la réponse attendue par le dispositif de commande du système main libre.

Le badge considéré reçoit également le signal représenté par le créneau 18 émis par les antennes extérieures. Il répond alors à ce signal d'interrogation de la part du véhicule par un signal de type RF schématisé sur le deuxième diagramme par un second créneau 20. Ce signal contient à la fois la réponse à la sollicitation aux antennes extérieures et la réponse qui a déjà été faite suite à la sollicitation des antennes intérieures. Cette réponse faite suite à la sollicitation par les antennes intérieures a été mémorisée dans le badge et est retransmise en superposition avec la réponse à la sollicitation par les antennes extérieures. Ainsi, le créneau 20 sur la figure 2 est hachuré comme l'est le créneau 16 mais comporte en plus des petits ronds correspondant à la réponse faite suite à la sollicitation par les antennes extérieures. La réponse ainsi formulée par le badge signifie non seulement que le badge a bien reçu le signal d'interrogation en we de sa localisation émis par les antennes extérieures mais il indique également que peu de temps auparavant il a déjà été sollicité par les antennes intérieures et qu'il a répondu à cette sollicitation. Le dispositif de gestion du système main libre du véhicule qui reçoit cette réponse sait alors que le badge se trouvé dans une zone de recouvrement 12 et en déduit donc qu'il y a un problème de recouvrement. Le dispositif de gestion interdira alors dans un tel cas le verrouillage des portières du véhicule 2.

La réponse faite suite à la sollicitation par les antennes intérieures ne doit pas être mémorisée trop longtemps pour éviter de voir apparaître d'autres problèmes. Si l'on considère les exemples numériques donnés précédemment, on peut par exemple supposer que la réponse est mémorisée pendant environ 10 ms. Cependant lorsque la recherche du badge est effectuée à l'extérieur non pas par une interrogation simultanée de toutes les antennes extérieures mais par interrogations successives de sous groupes d'antennes, ce temps de mémorisation peut être porté par exemple à 200 ms.

Le troisième diagramme de la figure 2 illustre le cas où la réponse faite par le badge suite à la sollicitation par les antennes intérieures ne parvient pas au dispositif de gestion des antennes extérieures à cause de la présence de parasites. Ce troisième diagramme reprend donc les créneaux 16 et 20 qui correspondent aux réponses effectuées par le badge suite aux sollicitations faites par les antennes intérieures puis les antennes extérieures. Par rapport au deuxième diagramme, on a également représenté une trame parasite 22 qui vient recouvrir le créneau 16, c'est-à-dire la réponse faite par le badge suite à la sollicitation par les antennes intérieures. Le dispositif de gestion du système main libre du véhicule ne reçoit alors que le signal de réponse correspondant au second créneau 20. Comme ce signal contient à la fois une réponse à la sollicitation des antennes extérieures et la réponse à la sollicitation des antennes intérieures, le dispositif de gestion sait que le badge se trouve dans une zone de recouvrement bien que n'ayant pas reçu de réponse du badge après le signal d'interrogation émis par les antennes intérieures.

Le procédé de localisation d'un badge de système main libre décrit ci-dessus permet d'augmenter la fiabilité de ces systèmes en évitant une fausse interprétation par le dispositif de gestion des signaux reçus (et non reçus). Une localisation plus fiable peut être réalisée sans nécessiter la mise en oeuvre de moyens matériels différents de ceux mis en oeuvre dans les systèmes main libre actuels. On retrouve ici les mêmes moyens émetteurs et récepteurs que ceux connus de l'homme du métier pour les systèmes main libre actuels. Les badges actuels comportent une électronique assez développée pour pouvoir mémoriser sans problème un signal afin de le retransmettre ultérieurement. Ce procédé permet donc, sans augmentation du prix du matériel mis en oeuvre, d'augmenter la fiabilité du système main libre.

La présente invention ne se limite pas au procédé décrit ci-dessus à titre d'exemple non limitatif. Elle conceme également toutes les variantes de réalisation à la portée de l'homme du métier dans le cadre des revendications ci-après.

Ainsi par exemple, le signal émis par le badge, lorsqu'il a déjà répondu à une sollicitation par un groupe d'antennes peu de temps auparavant, n'est pas forcément la superposition de deux signaux de réponse. On peut par exemple prévoir simplement une information codée d'un bit qui indique si oui ou non une réponse suite à une interrogation de localisation a été faite par le badge dans un laps de temps prédéterminé précédent la réponse émise. Sans mémoriser alors la première réponse émise, le badge mémorise alors uniquement le fait qu'il a déjà répondu à une sollicitation précédemment

Les fréquences, les durées, de manière générale toutes les valeurs numériques, données dans la description le sont à titre purement indicatif. D'autres valeurs peuvent être adoptées sans pour autant sortir du cadre de la présente invention.

## Revendications

1. Procédé de localisation d'un badge pour un système main libre d'un véhicule automobile comportant les étapes suivantes :
- émission sous forme d'interrogation (14) d'un signal par un premier groupe d'antennes du véhicule vers le badge,
- réponse (16) éventuelle du badge à cette première interrogation,
- émission sous forme d'interrogation d'un signal (18) par un second groupe d'antennes du véhicule vers le badge,
- réponse (20) éventuelle du badge à cette seconde interrogation,
**caractérisé en ce qu'**en cas de réponse (16) du badge à la première interrogation (14), le badge mémorise durant un laps de temps prédéterminé le fait qu'il a répondu à un signal émis par une antenne du premier groupe d'antennes et **en ce que** la réponse (20) éventuelle faite à la seconde interrogation (18) inclut le cas échéant une information indiquant qu'une réponse a déjà été émise suite à une interrogation provenant du premier groupe d'antennes, le badge étant alors localisé dans la zone couverte par le premier groupe d'antennes si une réponse est obtenue suite à la première interrogation, dans le zone couverte par le second groupe d'antennes si une réponse est obtenue suite à la seconde interrogation et dans la zone de recouvrement couverte par les deux groupes d'antennes si la réponse à la seconde information contient en outre une indication complémentaire indiquant que le badge a déjà répondu antérieurement.

2. Procédé selon la revendication 1, **caractérisé en ce que** le premier groupe d'antennes comporte des antennes émettant un signal électromagnétique avec une portée limitée sensiblement à l'intérieur du véhicule.

3. Procédé selon l'une des revendications 1 ou 2, **caractérisé en ce que** le second groupe d'antennes comporte des antennes émettant un signal électromagnétique avec une portée limitée essentiellement à l'extérieur du véhicule.

4. Procédé de localisation, pour un système main libre d'un véhicule automobile, d'un badge se trouvant à l'extérieur du véhicule, le véhicule étant équipé d'antennes intérieures émettant un signal électromagnétique à l'intérieur de l'habitacle (6) du véhicule et d'antennes extérieures émettant un signal électromagnétique essentiellement à l'extérieur de l'habitacle (6) avec un possible débordement à l'intérieur de l'habitacle (6), ce procédé comportant les étapes suivantes :
- émission sous forme d'interrogation (14) d'un signal par les antennes intérieures du véhicule vers le badge,
- réponse (16) éventuelle du badge à cette première interrogation,
- émission sous forme d'interrogation d'un signal (18) par les antennes extérieures du véhicule vers le badge,
- réponse (20) du badge à cette seconde interrogation,
**caractérisé en ce qu'**en en cas de réponse (16) du badge à la première interrogation (14), le badge mémorise durant un laps de temps prédéterminé le fait qu'il a répondu à un signal émis par une antenne intérieure, et **en ce que** la réponse (20) faite à la seconde interrogation inclut le cas échéant une information indiquant qu'une réponse a déjà été émise suite à une interrogation provenant des antennes intérieures, le badge étant alors localisé à l'extérieur du véhicule lorsqu'une réponse est reçue suite à la seconde interrogation et que cette réponse ne comporte pas d'indication particulière.

5. Procédé selon l'une des revendications 1 à 4, **caractérisé en ce que** les signaux émis par les deux groupes d'antennes sont des signaux basse fréquence de l'ordre de 125 kHz.

6. Procédé selon l'une des revendications 1 à 5, **caractérisé en ce que** la réponse du badge est effectuée en radio fréquence de l'ordre de 433 MHz.

7. Procédé selon l'une des revendications 1 à 6, **caractérisé en ce que** l'interrogation (18) effectuée par le second groupe d'antennes est réalisée suffisamment longtemps après l'interrogation (14) effectuée par le premier groupe d'antennes pour laisser le temps au badge de répondre à une interrogation avant qu'il n'en reçoive une autre.

8. Procédé selon l'une des revendications 1 à 7, **caractérisé en ce que** les antennes d'un même groupe d'antennes émettent les unes après les autres une interrogation (14, 18) vers le badge afin de limiter la puissance du signal émis.

## Claims

1. Method for locating a fob for a hands-free system of a motor vehicle consisting of the following stages:
- transmission in the form of a query (14) of a signal by a first group of vehicle antennas to the fob,
- potential response (16) of the fob to this first query,
- transmission in the form of a query of a signal (18) by a second group of vehicle antennas to the fob,
- potential response (20) of the fob to this second query, **characterised in that**, in the event of a response (16) by the fob to the first query (14), the fob remembers for a predetermined period of time that it has responded to a signal transmitted by an antenna from the first group of antennas and **in that** the potential response (20) to the second query (18) includes, where applicable, an item of data indicating that a response has already been sent following a query from the first group of antennas, the fob consequently being located in the zone covered by the first group of antennas if a response is obtained following the first query, in the zone covered by the second group of antennas if a response is obtained following the second query and in the overlap zone covered by both groups of antennas if the response to the second item of data additionally contains an indication that the fob has already responded.

2. Method according to Claim 1, **characterised in that** the first group of antennas consists of antennas transmitting an electromagnetic signal with a range limited approximately to the inside of the vehicle.

3. Method according to either one of Claims 1 or 2, **characterised in that** the second group of antennas consists of antennas transmitting an electromagnetic signal with a range limited approximately to outside the vehicle.

4. Method for locating, for a hands-free system of a motor vehicle, a fob that is outside the vehicle, the vehicle being equipped with interior antennas transmitting an electromagnetic signal to the inside of the passenger compartment (6) of the vehicle and exterior antennas transmitting an electromagnetic signal essentially outside the passenger compartment (6) and potentially inside the passenger compartment (6), this method consisting of the following stages:
- transmission in the form of a query (14) of a signal by the interior vehicle antennas to the fob,
- potential response (16) of the fob to this first query,
- transmission in the form of a query of a signal (18) by the exterior vehicle antennas to the fob,
- response (20) of the fob to this second query,
**characterised in that**, in the event of a response (16) by the fob to the first query (14), the fob remembers for a predetermined period of time that it has responded to a signal transmitted by an interior antenna, and **in that** the response (20) to the second query includes, where applicable, an item of data indicating that a response has already been transmitted following a query from the interior antennas, the fob consequently being located outside the vehicle if a response is received following the second query and this response does not include any special indication.

5. Method according to any one of Claims 1 to 4, **characterised in that** the signals transmitted by the two groups of antennas are low-frequency signals of around 125 kHz.

6. Method according to any one of Claims 1 to 5, **characterised in that** the response of the fob is made at a radio frequency of around 433 MHz.

7. Method according to any one of Claims 1 to 6, **characterised in that** the query (18) made by the second group of antennas is sent long enough after the query (14) made by the first group of antennas to give the fob time to respond to one query before receiving another.

8. Method according to any one of Claims 1 to 7, **characterised in that** antennas in the same group transmit queries (14, 18) one after another to the fob in order to limit the strength of the signal transmitted.

## Patentansprüche

1. Verfahren zum Lokalisieren eines Ausweises für ein Freihandsystem eines Kraftfahrzeugs, umfassend die folgenden Schritte:
- Aussenden eines Signals in Form einer Abfrage (14) durch eine erste Antennengruppe des Fahrzeugs an den Ausweis,
- eventuelle Antwort (16) des Ausweises auf diese erste Abfrage,
- Aussenden eines Signals (18) in Form einer Abfrage durch eine zweite Antennengruppe des Fahrzeugs an den Ausweis,
- eventuelle Antwort (20) des Ausweises auf diese zweite Abfrage,
**dadurch gekennzeichnet, dass** im Fall einer Antwort (16) des Ausweises auf die erste Abfrage (14) der Ausweis während einer vorgegebenen Zeitspanne die Tatsache speichert, dass er auf ein Signal geantwortet hat, das von einer Antenne der ersten Antennengruppe ausgesendet worden ist, und dadurch, dass die eventuelle Antwort (20), die auf die zweite Abfrage (18) erfolgt ist, gegebenenfalls eine Information umfasst, die anzeigt, dass eine Antwort im Anschluss an eine Abfrage von Seiten der ersten Antennengruppe bereits erfolgt ist, wobei der Ausweis dann in dem von der ersten Antennengruppe abgedeckten Bereich lokalisiert ist, wenn eine Antwort im Anschluss an die erste Abfrage erhalten wird, in dem von der zweiten Antennengruppe abgedeckten Bereich, wenn eine Antwort im Anschluss an die zweite Abfrage erhalten wird, und im Überlappungsbereich, der von den zwei Antennengruppen abgedeckt wird, wenn die Antwort auf die zweite Information außerdem einen zusätzlichen Hinweis enthält, der anzeigt, dass der Ausweis zuvor bereits geantwortet hat.

2. Verfahren nach Anspruch 1, **dadurch gekennzeichnet, dass** die erste Antennengruppe Antennen umfasst, die ein elektromagnetisches Signal mit einer im Wesentlichen auf das Innere des Fahrzeugs begrenzten Reichweite aussenden.

3. Verfahren nach einem der Ansprüche 1 oder 2, **dadurch gekennzeichnet, dass** die zweite Antennengruppe Antennen umfasst, die ein elektromagnetisches Signal mit einer im Wesentlichen auf das Äußere des Fahrzeugs begrenzten Reichweite aussenden.

4. Verfahren zum Lokalisieren für ein Freihandsystem eines Kraftfahrzeugs, mit einem Ausweis, der sich außerhalb des Fahrzeugs befindet, wobei das Fahrzeug mit inneren Antennen ausgestattet ist, die ein elektromagnetisches Signal innerhalb der Fahrgastzelle (6) des Fahrzeugs aussenden, und mit äußeren Antennen, die ein elektromagnetisches Signal im Wesentlichen außerhalb der Fahrgastzelle (6) mit einem möglichen Hinüberreichen in das Innere der Fahrgastzelle (6) aussenden, wobei dieses Verfahren die folgenden Schritte umfasst:
- Aussenden eines Signals in Form einer Abfrage (14) durch die inneren Antennen des Fahrzeugs an den Ausweis,
- eventuelle Antwort (16) des Ausweises auf diese erste Abfrage,
- Aussenden eines Signals (18) in Form einer Abfrage durch die äußeren Antennen des Fahrzeugs an den Ausweis,
- Antwort (20) des Ausweises auf diese zweite Abfrage,
**dadurch gekennzeichnet, dass** im Falle einer Antwort (16) des Ausweises auf die erste Abfrage (14) der Ausweis während einer vorgegebenen Zeitspanne die Tatsache speichert, dass er auf ein Signal geantwortet hat, das von einer inneren Antenne ausgesendet wurde, und dadurch, dass die Antwort (20), die auf die zweite Abfrage erfolgte, gegebenenfalls eine Information umfasst, die anzeigt, dass eine Antwort im Anschluss an eine Abfrage, die von den inneren Antennen ausging, bereits ausgesendet wurde, wobei der Ausweis dann außerhalb des Fahrzeugs lokalisiert ist, wenn eine Antwort im Anschluss an die zweite Abfrage empfangen worden ist und diese Antwort keinen besonderen Hinweis umfasst.

5. Verfahren nach einem der Ansprüche 1 bis 4, **dadurch gekennzeichnet, dass** die Signale, die von den zwei Antennengruppen ausgesendet werden, Niederfrequenz-Signale in der Größenordnung von 125 kHz sind.

6. Verfahren nach einem der Ansprüche 1 bis 5, **dadurch gekennzeichnet, dass** die Antwort des Ausweises mit Hochfrequenz in der Größenordnung von 433 MHz erfolgt.

7. Verfahren nach einem der Ansprüche 1 bis 6, **dadurch gekennzeichnet, dass** die Abfrage (18), die von Seiten der zweiten Antennengruppe erfolgt, lange genug nach der Abfrage (14) durchgeführt wird, die von Seiten der ersten Antennengruppe erfolgt, um dem Ausweis Zeit zu lassen, auf eine Abfrage zu antworten, bevor er eine weitere empfängt.

8. Verfahren nach einem der Ansprüche 1 bis 7, **dadurch gekennzeichnet, dass** die Antennen einer gleichen Antennengruppe eine nach der anderen eine Abfrage (14, 18) an den Ausweis aussenden, um die Leistung des ausgesendeten Signals zu begrenzen.
